# EUROPÄISCHE PATENTSCHRIFT

(11) **EP 3 505 377 B1**
(45) Veröffentlichungstag und Bekanntmachung des Hinweises auf die Patenterteilung: **18.11.2020**
(21) Anmeldenummer: 18214386.7
(22) Anmeldetag: 20.12.2018
(51) Int. Cl.: B60J 7/12

(54) **SOFT-TOP-VERDECK EINES CABRIOLET-FAHRZEUGS MIT EINER SPANNSTANGENEINRICHTUNG**
SOFT TOP FOR A CONVERTIBLE WITH A ROD TENSIONING DEVICE
CAPOTE SOFT-TOP D'UN VÉHICULE CABRIOLET DOTÉE D'UN DISPOSITIF DE TIGE DE SERRAGE

(30) Priorität: 30.12.2017 DE 102017012148
(43) Veröffentlichungstag der Anmeldung: 03.07.2019
(73) Patentinhaber: Valmet Automotive Oy, 23500 Uusikaupunki (FI)
(72) Erfinder: Lange, Daniel, 49565 Bramsche (DE)
(74) Vertreter: Kronthaler, Wolfgang N.K.

(56) Entgegenhaltungen:
- EP-A2- 2 098 398
- DE-A1-102007 020 734
- US-A- 5 816 644

## Beschreibung

Die Erfindung betrifft ein Soft-Top-Verdeck eines Cabriolet-Fahrzeugs, welches mittels eines Verdeckgestänges zwischen einer einen Fahrgastraum abschließenden geschlossenen Position und einer den Fahrgastraum zumindest bereichsweise freigebenden offenen Position verlagerbar ist, nach der im Oberbegriff des Patentanspruches 1 näher definierten Art.

Aus der Praxis sind mit einem flexiblen Verdeckbezug überspannte Soft-Top-Verdecke bekannt, bei denen der Verdeckbezug heckseitig mit einem in geschlossener Position auf einem heckseitigen Deckel ablegbaren Stoffhaltebügel verbunden ist. Um derartige Verdecke von einer geschlossenen Position in eine offene Position überführen zu können, wird der Stoffhaltebügel zunächst aufgeschwenkt, so dass anschließend ein Verdeckkastendeckel einen heckseitigen Stauraum für das Verdeck durch eine Öffnungsbewegung freigeben kann und das gesamte Verdeck in den Stauraum verlagert werden kann.

Ein derartiges Verdeck mit einem um einen Drehpunkt verschwenkbar an einer Hauptsäule eines Verdeckgestänges angelenkten Stoffhaltebügel ist aus der DE 10 2013 114 984 A1 bekannt, wobei zur Verschwenkung des Stoffhaltebügels zwischen einer im Wesentlichen horizontal angeordneten Schließlage und einer um den Drehpunkt mit einem heckseitigen Ende aufwärts verschwenkten Offenlage zwei gelenkig miteinander verbundene Spannlenker vorgesehen sind. Ein Spannlenker ist dabei mit dem Stoffhaltebügel und der andere Spannlenker mit einem Lenker eines Verdeckgestänges verbunden.

Bei einer derartigen Ausführung der Spannlenker wird ein Verbindungspunkt der Spannlenker bei einer Öffnungsbewegung des Stoffhaltebügels sehr nah an den Drehpunkt der Stoffhaltebügel an der Hauptsäule geführt, so dass insbesondere vor Erreichung der Offenlage des Stoffhaltebügels lediglich kleine Wirkhebel mit einer ungünstigen Krafteinleitung vorliegen und die Offenlage des Stoffhaltebügels gegebenenfalls nicht in gewünschtem Umfang erreichbar ist.

Aus der US 5 816 644 A ist ein Faltverdeck für ein Cabriolet-Fahrzeug mit einem Verdeckgestänge und einem heckseitigen Verdeckspannbügel bekannt, wobei zur Anhebung des Spannbügels auf jeder Fahrzeugseite zwei Sturmstangen vorgesehen sind. Eine hintere der beiden Sturmstangen ist heckseitig mit dem Spannbügel und frontseitig mit der vorderen Sturmstange verbunden. Die vordere Sturmstange ist über einen Hebel an das Verdeckgestänge angebunden und wird bei einem Aufstellen des Spannbügels mit einem Absenken des Verbindungspunktes zwischen den Sturmstangen heckwärts verlagert.

Weitere Lösungen mit zwei Stangen zwischen einem Verdeckgestänge und einem Verdeckspannbügel, mittels denen der Verdeckspannbügel aufstellbar ist, sind in der EP 2 098 398 A2 und in der DE 10 2007 020734 A1 gezeigt.

Es ist Aufgabe der vorliegenden Erfindung, ein Soft-Top-Verdeck eines Cabriolet-Fahrzeugs mit einem zumindest teilweise unabhängig von dem Verdeck bewegbaren Stoffhaltebügel zu schaffen, bei welchem eine aufgeschwenkte Offenlage des Stoffhaltebügels sicher erreichbar ist.

Diese Aufgabe wird mit einem Soft-Top-Verdeck gemäß den Merkmalen des Patentanspruches 1 gelöst.

Es wird somit ein Soft-Top-Verdeck eines Cabriolet-Fahrzeugs vorgeschlagen, welches mittels eines Verdeckgestänges zwischen einer einen Fahrgastraum abschließenden geschlossenen Position und einer den Fahrgastraum zumindest bereichsweise freigebenden offenen Position verlagerbar ist, wobei das Verdeck mit einem Stoffhaltebügel ausgeführt ist, der zumindest bei geschlossenem Verdeck unabhängig von dem Verdeckgestänge bewegbar und mittels einer zwei Spannstangen aufweisenden Spannstangeneinrichtung zwischen einer im Wesentlichen horizontalen Schließlage und einer Offenlage verlagerbar ist, wobei eine erste Spannstange der Spannstangeneinrichtung einerseits gelenkig an dem Stoffhaltebügel und anderseits gelenkig an einer zweiten Spannstange der Spannstangeneinrichtung angebunden ist, und wobei die zweite Spannstange mittels eines Mechanismus an das Verdeckgestänge angebunden ist.

Erfindungsgemäß wird vorgeschlagen, dass der Mechanismus zur Verlagerung eines in geschlossener bzw. abgesenkter Position des Stoffhaltebügels vorderen Endes der zweiten Spannstange bei einer Öffnungsbewegung des Stoffhaltebügels insbesondere bei ansonsten unbewegtem Verdeckgestänge in Verdecklängsrichtung nach vorne ausgeführt ist und wenigstens einen Hebel aufweist, mittels dem die zweite Spannstange in einem vorderen Bereich mit dem Verdeckgestänge verbunden ist, und zusätzlich in einem hierzu heckseitig angeordneten Bereich der zweiten Spannstange wenigstens eine Langlochführung oder wenigstens eine Kulissenführung oder einen zweiten Hebel zur Ausbildung eines Viergelenkmechanismus aufweist, mittels der bzw. dem die zweite Spannstange mit dem Verdeckgestänge verbunden ist.

Dadurch, dass das vordere Ende der zweiten Spannstange in der Offenlage des Stoffhaltebügels in Fahrzeuglängsrichtung weiter vorne angeordnet ist als in der Schließlage bzw. abgesenkten Lage des Stoffhaltebügels, kann ein großer Hebel realisiert werden und der Stoffhaltebügel somit mit einer vorteilhaft großen Kraft in seine Offenlage gebracht werden, die hierdurch sicher erreichbar ist. Dies liegt darin begründet, dass durch die Verlagerung des vorderen Endes der zweiten Spannstange auch der Verbindungspunkt der beiden Spannstangen bei einer Öffnungsbewegung des Stoffhaltebügels nach vorne verlagert wird und hierdurch ein Abstand zwischen einem Drehpunkt des Stoffhaltebügels und dem Verbindungspunkt der beiden Spannstangen insbesondere kurz vor Erreichen der aufgeschwenkten Position des Stoffhaltebügels vorteilhaft groß ist und günstige Hebelverhältnisse zur Kraftübertragung zwischen den Spannstangen und dem Stoffhaltebügel erzielbar sind.

Zudem kann durch die erfindungsgemäße Lösung ein Katapulteffekt mit einer starken Beschleunigung des Stoffhaltebügels bei einer Öffnungs- bzw. Schließbewegung, wie er bei bekannten zweiteiligen Ausführungen einer Spannstangeneinrichtung auftreten kann, einfach verhindert werden, und es wird eine Verzögerung der Bewegung des Stoffhaltebügels vor Erreichen seiner Offenlage erzielt.

Bei einer vorteilhaften Ausführung eines erfindungsgemäß ausgeführten Soft-Top-Verdecks ist es vorgesehen, dass der Mechanismus zur Verlagerung des in geschlossener Position des Stoffhaltebügels vorderen Endes der zweiten Spannstange bei einer Öffnungsbewegung des Stoffhaltebügels in Verdeckhochrichtung nach oben ausgeführt ist. Dadurch, dass der Verbindungspunkt der Spannstangen durch die Verlagerung des vorderen Endes der zweiten Spannstange nach oben in der Offenlage des Stoffhaltebügels höher angeordnet ist als ein Verbindungspunkt von Spannstangen bei bekannten Ausführungen, bei denen eine vordere Spannstange direkt an das Verdeckgestänge angebunden ist, ist der Verbindungspunkt der Spannstangen in der Offenlage des Stoffhaltebügels in Verdeckhochrichtung auf einfache Weise über einer Fahrzeugbrüstungslinie anordenbar, so dass hierdurch in montiertem Zustand des Verdecks Kollisionen mit der Karosserie sicher verhindert werden und eine Gestaltungsfreiheit in diesen Bereichen erhöht ist.

Bei der Erfindung kann es vorgesehen sein, dass die zweite Spannstange mit einem Hebel und einer Kulissenführung oder einer Langlochführung an das Verdeckgestänge angebunden ist, wobei es hinsichtlich der bei der Verlagerung des Stoffhaltebügels auftretenden Lasten insbesondere vorteilhaft ist, dass die zweite Spannstange in einem bei geschlossenem Stoffhaltebügel in Verdecklängsrichtung vorderen Bereich mittels eines Hebels und einem hierzu heckseitig angeordneten Bereich mittels einer Kulissenführung oder einer Langlochführung oder einen zweiten Hebel an das Verdeckgestänge angebunden ist.

Bei einer konstruktiv einfachen und hinsichtlich der Krafteinleitung optimierten Ausführung ist der Mechanismus als Viergelenkmechanismus ausgeführt sein, bei dem die zweite Spannstange über zwei Hebel an das Verdeckgestänge angebunden ist.

Die zweite Spannstange kann über den Mechanismus an eine Hauptsäule und/oder einen Hauptlenker des Verdeckgestänges und/oder an einen seitlichen Dachrahmen und/oder einen Lenker des Verdeckgestänges angebunden sein. Eine Anbindung der zweiten Spannstange an das Verdeckgestänge ist somit flexibel auch an bestehende Verdeckkonzepte anpassbar.

Zur Verlagerung des Stoffhaltebügels zwischen seiner Schließlage und seiner Offenlage ist bei einer konstruktiv einfachen Ausführung der Erfindung ein Verlagerungsmechanismus vorgesehen, der insbesondere in einem Verbindungsbereich der ersten Spannstange mit der zweiten Spannstange an die Spannstangeneinrichtung angebunden ist. Der Verlagerungsmechanismus ist beispielsweise als Zweischlag bzw. als Kniehebel ausgeführt, wobei vorzugsweise eine Antriebseinrichtung vorgesehen ist, die die Spannstangeneinrichtung und somit den Stoffhaltebügel über ein Zusammenwirken mit dem Verlagerungsmechanismus zwischen der geschlossenen Position und der aufgeschwenkten Position verlagert.

Der Stoffhaltebügel ist bei einer konstruktiv einfachen Ausführung der Erfindung zur Verlagerung zwischen seiner Schließlage und seiner Offenlage um einen Drehpunkt gelenkig gelagert. Der Stoffhaltebügel kann hierbei beispielsweise direkt an das Verdeckgestänge, vorzugsweise an eine Hauptsäule, oder über einen separaten Lenker an ein Hauptlager des Verdecks angebunden sein.

Wenn der Stoffhaltebügel an das Verdeckgestänge angebunden ist und bei einer Verdecköffnungsbewegung durch das Verdeckgestänge aus seiner Offenlage in eine Ablageposition verlagerbar ist, ist ein zeitaufwändiges separates Zurückschwenken des Stoffhaltebügels von seiner Offenlage in seine Schließlage vor einer Verschwenkung des Verdecks von seiner geschlossenen Position in seine offene Position vorteilhafterweise nicht erforderlich. Alternativ hierzu kann es auch vorgesehen sein, dass der Stoffhaltebügel vor einer Verlagerung des Verdecks von seiner geschlossenen Position in seine offene Position aus seiner Offenlage zurück in seine Schließlage verschwenkt wird.

Sowohl die in den Patentansprüchen angegebenen Merkmale als auch die in dem nachfolgenden Ausführungsbeispiel des erfindungsgemäßen Soft-Top-Verdecks angegebenen Merkmale sind jeweils für sich alleine oder in beliebiger Kombination miteinander geeignet, den erfindungsgemäßen Gegenstand weiterzubilden. Weitere Vorteile und vorteilhafte Ausführungsformen des erfindungsgemäßen Soft-Top-Verdecks ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfachte dreidimensionale Ansicht eines Cabriolet-Fahrzeugs mit einem in geschlossener Position gezeigten Soft-Top-Verdeck;
- Fig. 2: eine vereinfachte Seitenansicht eines Ausschnitts des Soft-Top-Verdecks gemäß Fig. 1, wobei ein zur Spannung eines in Fig. 2 nicht gezeigten Verdeckbezugs vorgesehener Stoffhaltebügel des Verdecks in einer Schließlage gezeigt ist;
- Fig. 3: eine vereinfachte Seitenansicht des Verdecks gemäß Fig. 2, wobei der Stoffhaltebügel bei ansonsten geschlossenem Verdeck in einer Zwischenstellung zwischen der Schließlage und einer Offenlage gezeigt ist.
- Fig. 4: eine vereinfachte Seitenansicht des Verdecks gemäß Fig. 2 und Fig. 3, wobei der Stoffhaltebügel bei ansonsten geschlossenem Verdeck in der aufgeschwenkten Offenlage ersichtlich ist;
- Fig. 5: eine vereinfachte Seitenansicht des Verdecks gemäß Fig. 2 bis Fig. 4, wobei das Verdeck in einer Zwischenposition zwischen der geschlossenen Position und einer offenen Position gezeigt ist; und
- Fig. 6: eine vereinfachte Seitenansicht des Verdecks gemäß Fig. 2 bis Fig. 5, mit sich in der offenen Position befindlichem Verdeck.

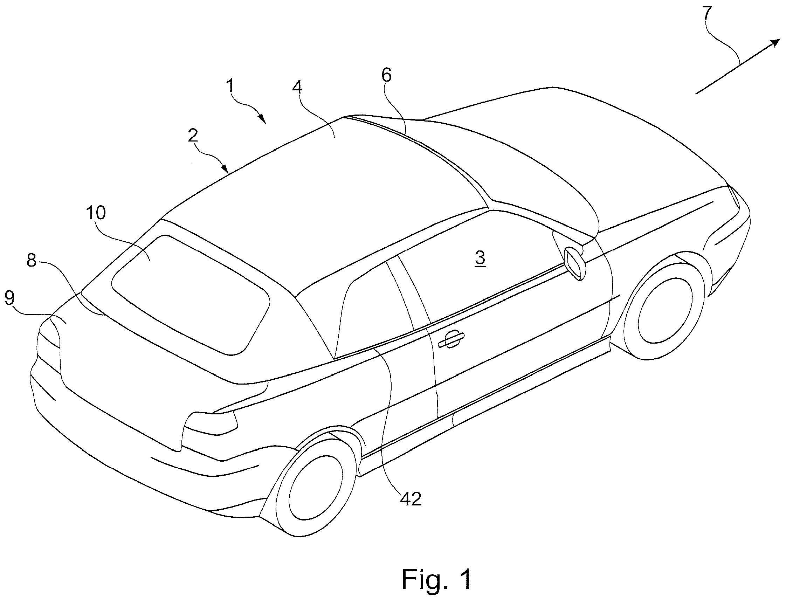

In Fig. 1 ist ein Cabriolet-Fahrzeug 1 mit einem Soft-Top-Verdeck 2 gezeigt, wobei sich das Verdeck 2 in einer einen Fahrgastraum 3 überdeckenden geschlossenen Position befindet. Das Verdeck 2 ist mittels eines Verdeckgestänges 5 zwischen der geschlossenen Position und einer in einem heckseitigen Bereich angeordneten offenen Position verlagerbar, in der das Verdeck 2 vorliegend in einem von einem Verdeckkastendeckel 9 des Cabriolet-Fahrzeugs 1 abgedeckten Verdeckablageraum angeordnet ist.

Das Verdeck 2 weist einen flexiblen Verdeckbezug 4 auf, der sich in der geschlossenen Verdeckposition von einem im Bereich des Verdeckkastendeckels 9 bzw. Heckdeckels angeordneten Stoffhaltebügel bzw. Spannbügel 8 in Fahrzeugfrontrichtung 7 bis über eine Dachspitze erstreckt, die in geschlossener Verdeckposition an einem Windschutzscheibenrahmen 6 festgelegt ist. In einem heckseitigen Bereich des Verdecks 2 ist eine Heckscheibe 10 in den Verdeckbezug 4 eingebunden.

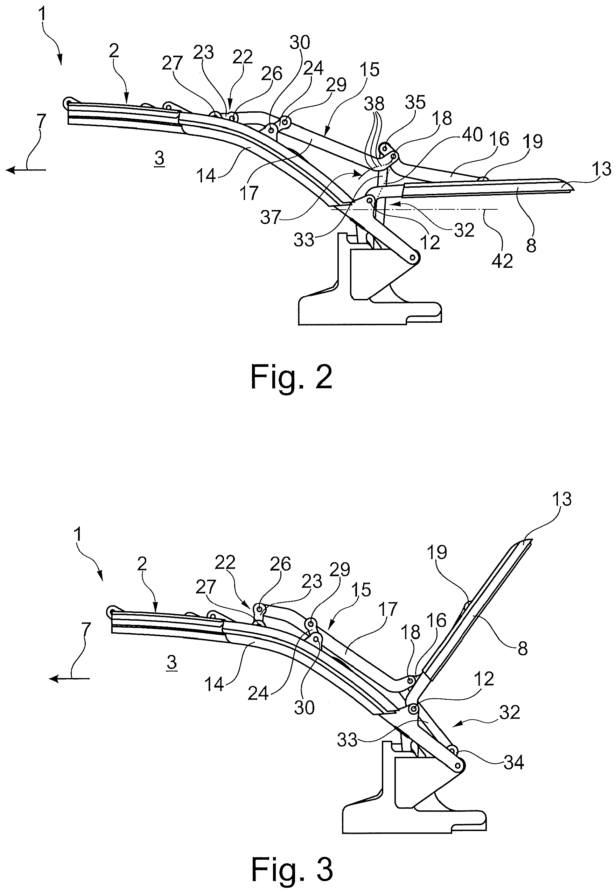

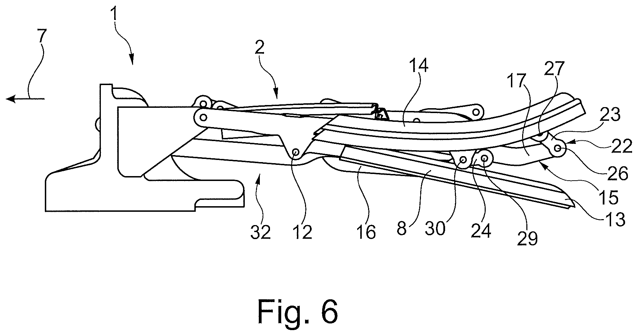

Das Verdeck 2 ist vorliegend dreiteilig ausgeführt und ist mittels des Verdeckgestänges 3 hier in einer Z-förmigen Faltung zwischen der geschlossenen Position und der offenen Position gemäß Fig. 6 verlagerbar. Die Dachspitze, vordere seitliche Rahmenteile und der flexible Verdeckbezug 4 sind dabei in den Fig. 2 bis Fig. 6 nicht dargestellt.

Der zur Spannung des Verdeckbezugs 4 in der geschlossenen Verdeckposition vorgesehene Stoffhaltebügel 8 ist in der geschlossenen Verdeckposition gemäß Fig. 1 und Fig. 2 im Wesentlichen horizontal angeordnet und liegt dabei vorliegend von oben auf dem Verdeckkastendeckel 9 des Cabriolet-Fahrzeugs 1 auf. Um den Verdeckkastendeckel 9 in eine den Verdeckablageraum freigebende Position mit einem in Fahrzeugfrontrichtung 7 vorderen Ende aufwärts verschwenken zu können, ist der Stoffhaltebügel 8 um einen Anlenkpunkt 12 bzw. Drehpunkt an einer Hauptsäule 14 des Verdeckgestänges 5 mit einem hinteren Ende 13 aufwärts verschwenkbar.

Es ist eine Spannstangeneinrichtung 15 mit einer ersten Spannstange 16 und einer in einem ersten Gelenkpunkt 18 an die erste Spannstange 16 angebundenen zweiten Spannstange 17 vorgesehen, die zur Verschwenkung des Stoffhaltebügels 8 ausgeführt ist. Die erste Spannstange 16 ist in einem dem ersten Gelenkpunkt 18 abgewandten Endbereich in einem zweiten Gelenkpunkt 19 an den Stoffhaltebügel 8 angebunden, wohingegen die zweite Spannstange 17 mittels eines Mechanismus 22 an das Verdeckgestänge 5 angebunden ist. Der Mechanismus 22 ist vorliegend als Viergelenkmechanismus mit zwei Hebeln 23 und 24 ausgeführt.

Ein erster Hebel 23 des Viergelenkmechanismus 22 ist dabei im Bereich eines dem ersten Gelenkpunkt 18 abgewandten vorderen Endes 20 der zweiten Spannstange 17 in einem dritten Gelenkpunkt 26 mit der zweiten Spannstange 17 und in einem vierten Gelenkpunkt 27 vorliegend mit der Hauptsäule 14 verbunden. Ein zweiter Hebel 24 des Viergelenkmechanismus 22 ist in einem zwischen dem dritten Gelenkpunkt 26 und dem ersten Gelenkpunkt 18 angeordneten Bereich in einem fünften Gelenkpunkt 29 mit der zweiten Spannstange 17 und in einem sechsten Gelenkpunkt 30 hier ebenfalls mit der Hauptsäule 14 verbunden.

Der Viergelenkmechanismus 22 wird somit vorliegend durch die Hauptsäule 14, die zweite Spannstange 17 und die Hebel 23 und 24 gebildet, wobei die Spannstangen 16, 17 eine deutlich größere Längserstreckung als die Hebel 23, 24 aufweisen.

Bei einer alternativen Ausführung der Erfindung kann es vorgesehen sein, dass die zweite Spannstange mittels des ersten Hebels und/oder des zweiten Hebels an einen Hauptlenker, einen der Hauptsäule vorgelagerten seitlichen Dachrahmen oder an einen Lenker des Verdeckgestänges angebunden ist, der insbesondere zur Ansteuerung einer Dachspitze vorgesehen ist.

In der geschlossenen Position des Verdecks 2 und bei sich in der Schließlage befindlichem Stoffhaltebügel 8 befinden sich die Spannstangen 16, 17 hier in einer Übertotpunktstellung, so dass der Stoffhaltebügel 8 sicher in der Schließlage gehalten ist und durch eine von außen aufgebrachte Kraft nicht in Richtung der Offenlage bewegbar ist. Die Spannstangen 16, 17 erstrecken sich dabei in Fahrzeugfrontrichtung bei sich in der Schließlage befindlichem Stoffhaltebügel 8 über nahezu die gesamte Erstreckung von dem zweiten Gelenkpunkt 19 bis zu der Anbindung an die Hauptsäule 14 im vierten Gelenkpunkt 27 durch den ersten Hebel 23 des Viergelenkmechanismus 22.

Zur Verlagerung des Stoffhaltebügels 8 zwischen seiner Schließlage und seiner um den Anlenkpunkt 12 verschwenkten Offenlage ist vorliegend eine Antriebseinrichtung vorgesehen, die mittels eines Verlagerungsmechanismus 32 mit der Spannstangeneinrichtung 15 wirkverbunden ist. Der Verlagerungsmechanismus 32 weist hierzu vorliegend zwei gelenkig miteinander verbundene Lenker 33, 34 auf, wobei ein erster Lenker 33 des Verlagerungsmechanismus 32 vorliegend auf einer dem zweiten Gelenkpunkt 19 abgewandten Seite des ersten Gelenkpunkts 18 mit der ersten Spannstange 16 in einem siebten Gelenkpunkt 35 verbunden ist. Der siebte Gelenkpunkt 35 ist dabei vorliegend bezüglich des Abstands des ersten Gelenkpunkts 18 von dem zweiten Gelenkpunkt 19 nahe an dem ersten Gelenkpunkt 18 angeordnet, wobei der Verlagerungsmechanismus bei einer alternativen Ausführung der Erfindung auch an der zweiten Spannstange angreifen kann. Die Antriebseinrichtung ist vorzugsweise in einem Gelenkpunkt an den zweiten Lenker 34 des Verlagerungsmechanismus 32 angebunden.

Bei einer Verdecköffnungsbewegung wird der Verlagerungsmechanismus 32 von der Antriebseinrichtung derart angetrieben, dass der erste Lenker 33 bezüglich der Fahrzeughochrichtung mit einer Bewegungskomponente nach unten verlagert wird. Hierdurch werden die Spannstangen 16, 17 im Bereich des ersten Gelenkpunktes 18 ebenfalls nach unten verlagert, so dass die Spannstangeneinrichtung 15 in eine in Fig. 3 ersichtliche, aus ihrer Übertotpunktstellung heraus bewegte Position verlagert und der Stoffhaltebügel 8 um den Anlenkpunkt 12 verschwenkt wird.

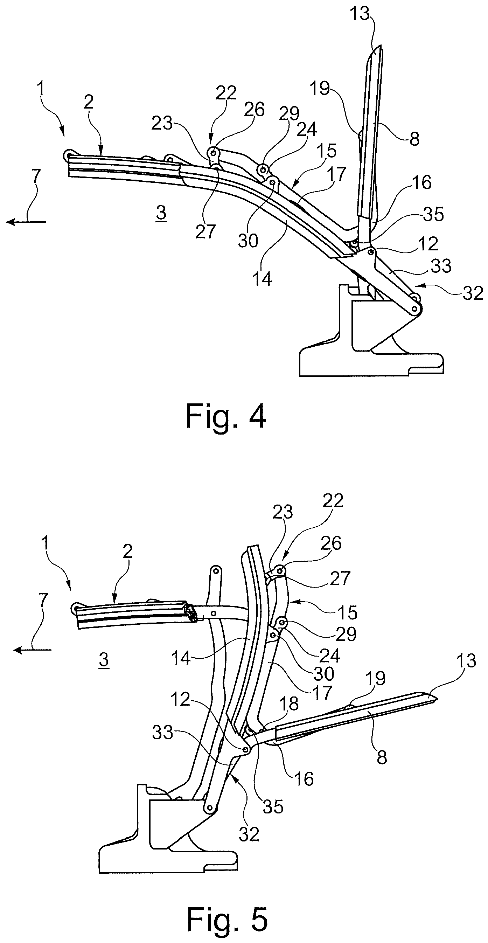

Ein vorderes Ende der zweiten Spannstange 17 wird, wie in Fig. 3 und Fig. 4 ersichtlich ist, hierbei durch den Viergelenkmechanismus 22 in Fahrzeugfrontrichtung nach vorne und in Fahrzeughochrichtung nach oben verlagert, so dass der dritte Gelenkpunkt 26 und hier auch der fünfte Gelenkpunkt 29 bei sich in der Offenlage gemäß Fig. 4 befindlichem Stoffhaltebügel 8 gegenüber der jeweiligen Position in der Schließlage des Stoffhaltebügels 8 in Fahrzeughochrichtung nach vorne und in Fahrzeughochrichtung nach oben verlagert ist.

Durch diese Verlagerung des vorderen Endes der zweiten Spannstange 17 mittels des Viergelenkmechanismus 22 führt der die Spannstangen 16, 17 verbindende erste Gelenkpunkt 18 bei einer Öffnungsbewegung des Stoffhaltebügels 8 bei ansonsten unbewegtem Verdeckgestänge 5 eine in Fig. 2 näher ersichtliche hier S-förmige Bewegungsbahn 37 aus. Auf der eine sogenannte Tracekurve darstellenden Bewegungsbahn 37 sind vorliegend eine Vielzahl von Punkten 38 angeordnet, wobei die Punkte 38 die Position des ersten Gelenkpunkts 18 während der Verlagerungsbewegung des Stoffhaltebügels 22 nach Ablauf eines jeweils konstanten Zeitintervalls darstellen. Hierbei ist ersichtlich, dass der erste Gelenkpunkt 18 aufgrund der engen Anordnung der Punkte 38 zueinander zu Beginn einer Öffnungsbewegung des Stoffhaltebügels 8 aus der Schließlage langsam bewegt wird, die Bewegung in einem Mittelteil schnell ist und vor Erreichen der Offenlage des Stoffhaltebügels 8 wieder langsam ist.

In Fig. 2 ist weiterhin eine Bewegungsbahn 40 des ersten Gelenkpunktes 18 gezeigt, die dieser durchlaufen würde, wenn das vordere Ende der zweiten Spannstange 17 wie bei bekannten Ausführungen ohne den Viergelenkmechanismus direkt an der Hauptsäule 14 angelenkt wäre. Durch einen Vergleich der Bewegungsbahn 37 mit der Bewegungsbahn 40 ist ersichtlich, dass der erste Gelenkpunkt 18 in der Offenlage des Stoffhaltebügels 8 durch das Vorsehen des Viergelenkmechanismus 22 gegenüber der entsprechenden Position ohne den Viergelenkmechanismus 22 in Fahrzeughochrichtung nach oben und in Fahrzeugfrontrichtung nach vorne verlagert ist und hierdurch ein Abstand gegenüber dem Anlenkpunkt 12 des Stoffhaltebügels 8 in der Offenlage des Stoffhaltebügels 8 vergrößert ist. Hierdurch liegen insbesondere vor Erreichen der Offenlage des Stoffhaltebügels 8 günstige Hebelverhältnisse zur Kraftübertragung zwischen den Spannstangen 16, 17 und dem Stoffhaltebügel 8 vor, so dass der Stoffhaltebügel 8 in Kombination mit der langsamen Bewegung des ersten Gelenkpunktes 18 vor Erreichen der Offenlage mit einer gewünscht großen Kraft sicher in seine Offenlage verlagerbar ist. Zudem wird durch den großen Abstand des ersten Gelenkpunkts 18 von dem Anlenkpunkt 12 vor Erreichen der Offenlage des Stoffhaltebügels 8 eine Reduktion der Verlagerungsbewegung der Spannstangen 16, 17 und somit auch des Stoffhaltebügels 8 vor Erreichen der Offenlage erzielt.

Aus einem Vergleich der Endposition des ersten Gelenkpunktes 18 der Bewegungsbahnen 37 und 40 geht auch hervor, dass der erste Gelenkpunkt 18 durch das Vorsehen des Viergelenkmechanismus 22 in der Offenlage des Stoffhaltebügels 8 in Fahrzeughochrichtung einen größeren Abstand zu einer in Fig. 2 strichliert gezeigten Fahrzeugbrüstungslinie 42 aufweist, so dass eine Freiheit in der Auslegung der jeweiligen Komponenten hierdurch vorteilhafterweise vergrößert ist.

Wenn der Stoffhaltebügel 8 von der Antriebseinrichtung in die Offenlage bewegt ist, wird der Stoffhaltebügel 8 durch die Anbindung des Stoffhaltebügels 8 an das Verdeckgestänge 5 mitsamt dem restlichen Verdeck 2 in die geöffnete Verdeckposition verlagert. Das Verdeck 2 wird dabei vorliegend, wie aus einem Übergang von Fig. 4 über Fig. 5 zu Fig. 6 ersichtlich ist, in einer z-förmigen Faltung in den Verdeckablageraum verlagert.

## Patentansprüche

1. Soft-Top-Verdeck (2) eines Cabriolet-Fahrzeugs (1), welches mittels eines Verdeckgestänges (5) zwischen einer einen Fahrgastraum (3) abschließenden geschlossenen Position und einer den Fahrgastraum (3) zumindest bereichsweise freigebenden offenen Position verlagerbar ist, mit einem zumindest bei geschlossenem Verdeck (2) unabhängig von dem Verdeckgestänge (5) bewegbaren und mittels einer zwei Spannstangen (16, 17) aufweisenden Spannstangeneinrichtung (15) zwischen einer im Wesentlichen horizontalen Schließlage und einer Offenlage verlagerbaren Stoffhaltebügel (8), wobei eine erste Spannstange (16) der Spannstangeneinrichtung (15) einerseits gelenkig an dem Stoffhaltebügel (8) und anderseits gelenkig an einer zweiten Spannstange (17) der Spannstangeneinrichtung (15) angebunden ist, wobei die zweite Spannstange (17) mittels eines Mechanismus (22) an das Verdeckgestänge (5) angebunden ist, **dadurch gekennzeichnet, dass** der Mechanismus (22)
- zur Verlagerung eines in geschlossener Position vorderen Endes (20) der zweiten Spannstange (17) bei einer Öffnungsbewegung des Stoffhaltebügels (8) in Verdecklängsrichtung nach vorne ausgeführt ist, und
- wenigstens einen Hebel (23) aufweist, mittels dem die zweite Spannstange (17) in einem vorderen Bereich mit dem Verdeckgestänge (5) verbunden ist, und
- zusätzlich in einem hierzu heckseitig angeordneten Bereich der zweiten Spannstange (17) wenigstens eine Langlochführung oder wenigstens eine Kulissenführung oder einen zweiten Hebel (24) zur Ausbildung eines Viergelenkmechanismus aufweist, mittels der bzw. dem die zweite Spannstange (17) mit dem Verdeckgestänge (5) verbunden ist.

2. Soft-Top-Verdeck nach Anspruch 1,
**dadurch gekennzeichnet, dass** der Mechanismus (22) zur Verlagerung des in geschlossener Position vorderen Endes (20) der zweiten Spannstange (17) bei einer Öffnungsbewegung des Stoffhaltebügels (8) in Verdeckhochrichtung nach oben ausgeführt ist.

3. Soft-Top-Verdeck nach einem der Ansprüche 1 oder 2,
**dadurch gekennzeichnet, dass** die zweite Spannstange (17) über den Mechanismus (22) an eine Hauptsäule (14) oder einen Hauptlenker des Verdeckgestänges (5) angebunden ist.

4. Soft-Top-Verdeck nach einem der Ansprüche 1 oder 2,
**dadurch gekennzeichnet, dass** die zweite Spannstange (17) über den Mechanismus (22) an einen seitlichen Dachrahmen oder einen Lenker des Verdeckgestänges (5) angebunden ist.

5. Soft-Top-Verdeck nach einem der Ansprüche 1 bis 4,
**dadurch gekennzeichnet, dass** zur Verlagerung des Stoffhaltebügels (8) zwischen der Schließlage und der Offenlage ein Verlagerungsmechanismus (32) vorgesehen ist, der in einem Verbindungsbereich der ersten Spannstange (16) mit der zweiten Spannstange (17) an die Spannstangeneinrichtung (15) angebunden ist.

6. Soft-Top-Verdeck nach einem der Ansprüche 1 bis 5, **dadurch gekennzeichnet, dass** der Stoffhaltebügel (8) zur Verlagerung zwischen seiner Schließlage und seiner Offenlage um einen Drehpunkt (12) gelenkig gelagert ist.

7. Soft-Top-Verdeck nach einem der Ansprüche 1 bis 6, **dadurch gekennzeichnet, dass** der Stoffhaltebügel (8) an das Verdeckgestänge (5) angebunden ist und bei einer Verdecköffnungsbewegung durch das Verdeckgestänge (5) aus seiner Offenlage in eine Ablageposition verlagerbar ist.

## Claims

1. A soft top hood (2) for a convertible vehicle (1), said hood (2) being displaceable by means of a hood linkage (5) between a closed position covering a passenger compartment (3) and an open position uncovering at least part of the passenger compartment (3), comprising a fabric-holding bracket (8), which is movable independently of the hood linkage (5), at least when the hood (2) is closed, and is displaceable between a substantially horizontal closed position and an open position by means of a tension rod device (15) comprising two tension rods (16, 17), wherein a first tension rod (16) of the tension rod device (15) is, on the one hand, articulated to the fabric-holding bracket (8) and is, on the other hand, articulated to a second tension rod (17) of the tension rod device (15), wherein the second tension rod (17) is connected to the hood linkage (5) by means of a mechanism (22), **characterised in that** the mechanism (22)
- is designed such that an end (20) of the second tension rod (17), which is the front end of the latter in the closed position, is moved forward in the longitudinal direction of the hood (2) during the opening movement of the fabric-holding bracket (8), and
- has at least one lever (23) by means of which the second tension rod (17) is connected to the hood linkage (5) in a front area, and
- additionally has, in a region of the second tension rod (17) arranged at the rear thereof, at least one elongated hole guide or at least one sliding block guide or a second lever (24) for forming a four-bar linkage, by means of which the second tension rod (17) is connected to the hood linkage (5).

2. The soft top hood according to claim 1,
**characterised in that** the mechanism (22) is designed such that the end (20) of the second tension rod (17), which is the front end of the latter in the closed position, is moved upwards in the vertical direction of the hood (2) during an opening movement of the fabric-holding bracket (8).

3. The soft top hood according to any one of claims 1 or 2,
**characterised in that** the second tension rod (17) is connected via the mechanism (22) to a main column (14) or a main link of the hood linkage (5).

4. The soft top hood according to any one of claims 1 or 2,
**characterised in that** the second tension rod (17) is connected via the mechanism (22) to a lateral roof frame or a link of the hood linkage (5).

5. The soft top hood according to any one of claims 1 to 4,
**characterised in that** a displacement mechanism (32) is provided for displacing the fabric-holding bracket (8) between the closed position and the open position, said mechanism (32) being connected to the tension rod device (15) in a connection region of the first tension rod (16) with the second tension rod (17).

6. The soft top hood according to any one of claims 1 to 5,
**characterised in that** the fabric-holding bracket (8) is articulated about a pivot point (12) for displacement between its closed position and its open position.

7. The soft top hood according to any one of claims 1 to 6, **characterised in that** the fabric-holding bracket (8) is connected to the hood linkage (5) and can be displaced from its open position to a storage position by the hood linkage (5) during a hood opening movement.

## Revendications

1. Capote souple (2) d'un véhicule cabriolet (1), qui peut être déplacée au moyen d'une tringlerie de capote (5) entre une position fermée fermant un habitacle (3) et une position ouverte découvrant au moins partiellement l'habitacle (3), avec un étrier de retenue du tissu (8) qui, au moins lorsque la capote (2) est fermée, peut être déplacé indépendamment de la tringlerie de capote (5) et peut être déplacé entre une position fermée sensiblement horizontale et une position ouverte au moyen d'un dispositif de tiges de serrage (15) comportant deux tiges de serrage (16, 17), une première tige de serrage (16) du dispositif de tiges de serrage (15) étant articulée d'une part sur l'étrier de retenue du tissu (8) et d'autre part sur une deuxième tige de serrage (17) du dispositif de tiges de serrage (15), la deuxième tige de serrage (17) étant reliée à la tringlerie de capote (5) au moyen d'un mécanisme (22), **caractérisée en ce que** le mécanisme (22)
- est conçu pour déplacer une extrémité (20) de la deuxième tige de serrage (17), qui est l'extrémité avant en position fermée, vers l'avant dans la direction longitudinale de la capote lors d'un mouvement d'ouverture de l'étrier de retenue du tissu (8), et
- comporte au moins un levier (23) au moyen duquel la deuxième tige de serrage (17) est reliée à la tringlerie de capote (5) dans une région avant, et
- comporte en outre, dans une région de la deuxième tige de serrage (17) disposée à l'arrière de celle-ci, au moins un guidage à trou oblong ou au moins un guidage à coulisse ou un deuxième levier (24) pour former un mécanisme à quatre articulations, au moyen duquel guidage ou mécanisme la deuxième tige de serrage (17) est reliée à la tringlerie de capote (5).

2. Capote souple selon la revendication 1,
**caractérisée en ce que** le mécanisme (22) est conçu pour déplacer l'extrémité (20) de la deuxième tige de serrage (17), qui est l'extrémité avant en position fermée, vers le haut dans la direction verticale de la capote lors d'un mouvement d'ouverture de l'étrier de retenue du tissu (8).

3. Capote souple selon l'une quelconque des revendications 1 ou 2,
**caractérisée en ce que** la deuxième tige de serrage (17) est reliée par le mécanisme (22) à un pilier principal (14) ou à un bras principal de la tringlerie de capote (5).

4. Capote souple selon l'une quelconque des revendications 1 ou 2,
**caractérisée en ce que** la deuxième tige de serrage (17) est reliée par le mécanisme (22) à un cadre de toit latéral ou à un bras de la tringlerie de capote (5).

5. Capote souple selon l'une quelconque des revendications 1 à 4,
**caractérisée en ce qu'**il est prévu un mécanisme de déplacement (32) pour déplacer l'étrier de retenue du tissu (8) entre la position fermée et la position ouverte, ledit mécanism étant relié au dispositif de tiges de serrage (15) dans une région de liaison de la première tige de serrage (16) avec la deuxième tige de serrage (17).

6. Capote souple selon l'une quelconque des revendications 1 à 5,
**caractérisée en ce que** l'étrier de retenue du tissu (8) est articulé autour d'un point de pivot (12) pour le déplacement entre sa position fermée et sa position ouverte.

7. Capote souple selon l'une quelconque des revendications 1 à 6,
**caractérisée en ce que** l'étrier de retenue du tissu (8) est relié à la tringlerie de capote (5) et peut être déplacé de sa position ouverte vers une position de rangement par la tringlerie de capote (5) lors d'un mouvement d'ouverture de capote.
